# EUROPEAN PATENT APPLICATION

(11) **EP 2 773 023 A1**
(43) Date of publication of application: **03.09.2014**
(21) Application number: 13192783.2
(22) Date of filing: 13.11.2013
(51) Int. Cl.: H02K 1/27, H02K 1/28, H02K 1/30

(54) **Axial flux motor**

(30) Priority: 27.02.2013 GB 201303504
(71) Applicant: Yasa Motors Ltd, Abingdon, Oxfordshire OX14 4SD (GB)
(72) Inventor: Woolmer, Timothy, Wheatley, Oxfordshire OX33 1NY (GB); King, Charles, Kidlington, Oxfordshire OX5 1EH (GB); East, Mark, Hungerford, Berkshire RG17 0HS (GB); Court, Andrew, Bicester, Oxfordshire OX26 6UK (GB); Biddulph, Jonathan, Abingdon, Oxfordshire OX14 4SD (GB)
(74) Representative: Probert, Rhyan Wyn

(57) **Abstract**

The present invention provides a composite rotor for an axial flux motor wherein the rotor (10) includes: a holding means (15) for a plurality of permanent magnets (40) circumferentially spaced around the rotor (10). each of said permanent magnets (40) lying within said outer diameter (34) of said rotor (10); and an over-winding of strands (50) of reinforcement material toroidally wound over said holding means (15) and said magnets (40). The strands (50) help strengthen the rotor (10) and provide a light weight and high performance product.

## Description

### Background

The present invention relates to electric machines and relates particularly but not exclusively to electric motors or generators of the kind known generally as axial flux motors or generators in which stators cooperate with rotors across an air gap said air gap being the direction of flux traversal and is predominantly parallel the axis of rotation.

In GB 2468018A Oxford YASA Motors discloses a machine comprising a series of coils wound around pole pieces spaced circumferentially around the stator and disposed axially, (i.e. parallel the rotation axis of the rotor). The rotor has two stages comprising discs provided with permanent magnets that face either end of each electromagnetic coil of the stator.

Said rotor stages typically comprise a hub region and an annular ring, said annular ring being of soft magnetic material and used to convey magnetic flux between adjacent magnets said magnets being surface mounted and spaced circumferentially around said rotor stage annular ring and disposed axially, (i.e. parallel the rotation axis of the rotor). High rotational rotor speeds generate high centripetal force on rotor stages particularly on surface mounted magnets and loss of magnet adhesion is a risk for this motor topology. It is possible for said annulus and hub regions to be continuous, made of the same material and is typically ferromagnetic steel, however ferromagnetic steel is conductive and eddy current losses are generated during use; to reduce eddy currents it is possible for said annular ring to be recessed so as to hold a soft magnetic material, said soft magnetic material being soft magnetic powder composite or laminated electrical steel, said soft magnetic material being substantially capable of carrying magnetic flux between adjacent surface mounted magnets and is of high electrical resistance in a plane substantially radial to the motor axis.

Also known are double stator single rotor axial flux motors wherein said single rotor contains magnets disposed circumferentially with pole faces, facing across air gaps to stator electromagnetic coils similarly disposed. Said double stator machines preferably have rotors comprising a non-magnetic matrix said matrix having embedded magnets disposed circumferentially said magnets having their pole faces aligned predominantly parallel the axis of rotation, said magnet North and South pole faces facing across air gaps towards said stator.

There is advantage in motors of the present invention in maximising torque generated by antagonistic magnetomotive force between stator and rotor by minimising air gaps between stator and rotor consistent with stiffness of said rotor stages and stack tolerances of pertinent components. With minimised stator to rotor air gap there is potential for significant axial load between said rotor stage and motor stator at rest and during operation and it is preferable for said rotor to be stiff so as to resist bending of said rotor which might otherwise interfere with the stator.

A problem to be solved by the present invention is to achieve sufficient stiffness of said rotor stage so as to minimise movement towards said stator, whilst minimising said rotor stage mass, minimising said eddy currents and maximising magnetic flux carrying capacity. Another problem for motors of the present invention is to maintain integrity of said rotor stages that in the course of normal operation are caused to rotate at high rotational speed, which speed induces large centripetal forces on said magnets and so stresses attachment between said surface mounted magnets and said annular ring to which they are fixed.

The majority of electric dynamo machines comprise a rotor and stator wherein flux traverses radially between rotor and stator i.e. orthogonal to axis of rotation and antagonistic reaction between stator and rotor flux urges the rotor to rotate, so called radial flux machines. Said radial flux machines generate considerable centripetal force when the rotor is rotating. Said radial flux machines have been mechanically improved to accommodate centripetal force by wrapping rotors with fibre reinforced with a resin matrix. US2004/0021396 is one such example and JP10210690 another, wherein said fibres provide strength in the circumferential direction and maintain structural integrity of the rotor against centripetal forces.

Although the majority of electric dynamo machines commercially available are of radial flux design there is increasing interest in axial flux machines as described herein. However particularly for axial flux machines operating at high rotation speed there are considerable challenges due to combined axial and radial forces during operation.

To address these challenges US 2009/0072639 A1 teaches magnet segments that may optionally be combined with hub segments and which are wrapped with a fibrous belt around the periphery of each subassembly, said fibrous belt being infiltrated with an adhesive component. Said subassemblies being assembled to form a circular rotor disk and bonded by way of the adhesive infiltration to form a monolithic rotor. Whereas this approach improves radial strength of each segment and so resistance to centripetal force there is no substantial improvement in radial strength.. The assembly process for US2009/0072639 relies on manufacture and handling of multiple sub-assemblies to form a rotor with corresponding labour costs, co-planarity and multiple stack-up tolerance concerns.

An object of the present invention is to provide sufficient axial strength and improve radial strength of said axial flux rotor stages. It is a further object to maintain physical integrity of surface mounted magnet rotor stages of the present invention. It is yet another object of the present invention to minimise air gap between stator and rotor whilst achieving said necessary strength and integrity for high speed rotation. A further object of the present invention is to maximise rotor magnetic flux carrying capacity. A further object of the present invention is ease of manufacture which is met by use of standard toroidal winding machines. Advantageously the present invention also provides corrosion resistance to magnets and soft magnetic materials.

According to the present invention there is provided a composite rotor for an axial flux motor wherein the rotor includes: a holding means for a plurality of permanent magnets circumferentially spaced around the rotor; each of said permanent magnets lying within said outer diameter of said rotor; and an over-winding of strands of reinforcement material toroidally wound over said holding means and said magnets.

In a preferred and particular arrangement the rotor includes: a boss ring, having an inner circumference and an outer circumference; an annular ring, having an inner diameter, an outer diameter, a first side face and a second side face, a plurality of permanent magnets circumferentially spaced around the first side face and within said outer diameter of said annular ring; and wherein said over-winding of strands of reinforcement material extends over and around said boss ring, said annular ring and said magnets.

Advantageously, the present invention includes an encapsulation layer extending over and through said reinforcement material and in-filling between said strands.

Preferably, said encapsulation layer comprises a cured resin material.

In a particularly advantageous arrangement said boss ring includes a radially extending support member extending radially outward from said outer circumference.

Advantageously, the arrangement includes an axially extending outer circular perimeter and wherein said outer circumference of the boss forms an axially extending inner perimeter.

Preferably, said boss includes raised castellation portions circumferentially spaced around said inner circumference and wherein said strands pass between said castellation portions and are confined therebetween by, for example edges of the castelations.

Advantageously, said boss ring includes one or more attachment features which may take the form of, for example, holes.

Preferably, said one or more attachment features are radially aligned with one or other of said castellation portions.

Advantageously, an inlay mask is provided and extends between said magnets and terminating substantially flush with the outer surface of each magnet.

The arrangement may include an inlay mask wherein said inlay mask has location features, that engage with corresponding location features on said boss ring, said location features determining the rotational position of said inlay mask.

Preferably, said over-winding comprises uniaxial fibre tow.

*Advantageously,* the holding means comprises an electrical steel lamination.

Preferably, the arrangement includes a plurality of discrete ribs of said over-winding, each rib extending between said inner circumference of said boss and said outer diameter of said annular ring and being circumferentially spaced from each other.

Advantageously, said over-winding is more highly spread at a radially outer position than at a radially inner position.

Advantageously, the rotor includes: a holding means for a plurality of permanent magnets circumferentially spaced around the rotor and being held thereby said holding means extending between said magnets and terminating substantially flush with the outer surface of each magnet; each of said permanent magnets lying within said outer diameter of said rotor; an over-winding of strands of reinforcement material toroidally wound over said holding means and said magnets.

The present invention will now be more particularly described by way of example only with reference to the accompanying drawings, in which:
Figure 1 is a schematic diagram of a cross section through a rotor stage with boss ring, annular ring, magnets and fibre reinforcement
Figure 2 is a schematic diagram of a rotor with a radially extending boss ring and an annular ring

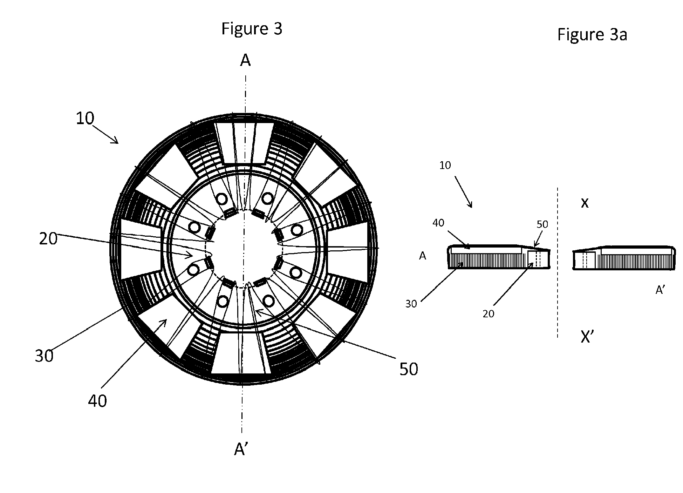

Figure 3 is a schematic diagram of a plan view of a rotor stage with boss ring, annular ring, magnets and fibre reinforcement
Figure 3a is a schematic diagram of a cross section along a line A to A' through a rotor stage of the present invention
Figure 4 is a schematic diagram of a boss ring
Figure 5 is a schematic diagram of a coplanarising inlay
Figure 6 is a schematic diagram of a boss ring and annular ring
Figure 7 is a schematic diagram of a fibre tow toroidally wound evenly
Figure 8 is a schematic diagram of a fibre tow toroidally wound unevenly to produce spokes
Figure 9 is a schematic diagram of
Figure 10 is a schematic diagram of a portion of a double stator, rotor with overwinding
Figure 11 is a schematic diagram of a cross section of a double stator, rotor with overwinding

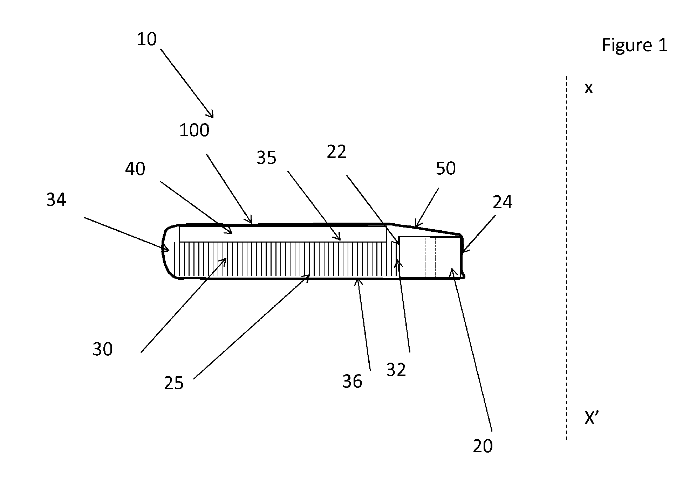

Referring to Figure 1 there is provided one form of a composite rotor 10 for an axial flux motor rotating about an axis XX' wherein the rotor 10 includes: a boss ring 20 made of a load bearing material, having an inner circumference 24 and an outer circumference 22; an annular ring 30 used to carry magnetic flux and having an inner diameter 32 and an outer diameter 34, a first side face 35 and a second side face 36, a plurality of permanent magnets 40 circumferentially spaced around the first side face 35 and being bonded thereto and each of said permanent magnets 40 lying within said outer diameter 34 of said annulus ring 30; an over-winding of strands 50 of reinforcement material toroidally wound over said boss ring 20, said annular ring 30 and said magnets 40.

To gain ultimate strength and rigidity of said composite rotor 10 there is included an encapsulation layer 100 extending over and through said reinforcement material 50 and in-filling between said strands 50 to form a reinforced fibre wrapped composite rotor. Said encapsulation layer may be formed by resin transfer moulding, vacuum bagging and the like processes or a similar effect may be caused by wet toroidal winding of reinforcement strands 50. Said strands 50 may be chosen from any of several reinforcement fibres including glass, carbon, aramid, molecularly spun polyethylene and the like and said encapsulation layer may be chosen from a wide variety of resins the choice of which will be known to those skilled in the art of composites, and may include: epoxy, polyester, vinyl ester, phenolic, polyurethane, resins and associated hardeners and occasionally accelerators and may also include adhesion promoters such as silanes.

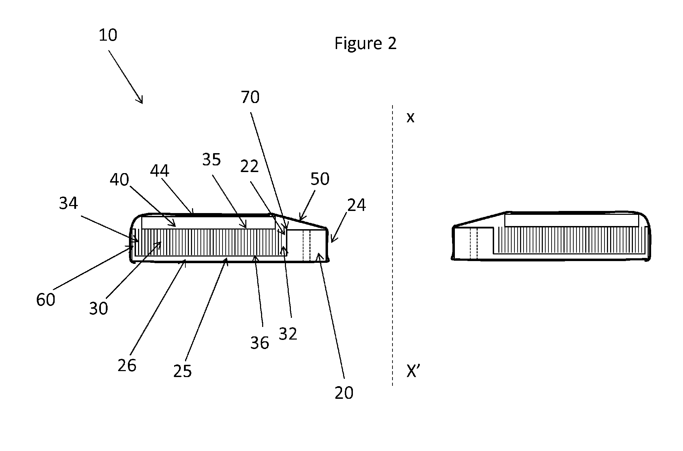

An alternative arrangement of the composite rotor 10 is shown in Figure 2 wherein said boss ring 20 has a radially extending support member 26 extending radially outward from said outer circumference 22 of said boss ring 20. Said radially extending support member 26 may include an axially extending outer circular perimeter 60 and may also have a corresponding axially extending inner perimeter 70 which may, for example, be formed on the outer circumference 22 of the boss 20. Said arrangement forms an annular cup into which said annular ring 30 may be held in place. Mechanical engagement or adhesives may be used to retain the annular ring if required.

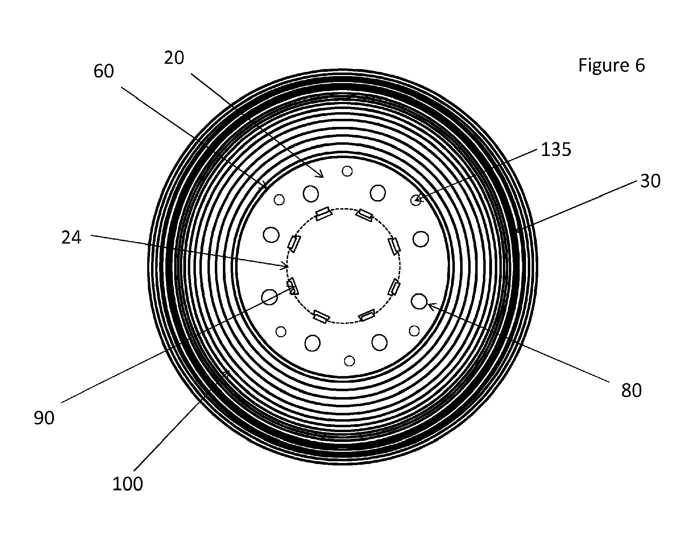

Sufficient rotor strength and stiffness may be derived without recourse to said supporting member 26 as shown in Figures 1 and 6, by careful choice of materials to make up said annular ring 30, which ring may be bonded to said boss ring 20. Said annular ring 30 is preferably of high magnetic permeability, and of poor electrical conductance in the radial aspect and such characteristics may be gained from laminated coiled electrical steel. Said boss ring 20 may be made of steel though could conceivably be made of ceramic or a composite material. The bonding mechanism between said boss and said annular rings may be chosen from a variety of methods including; brazing, adhesive bonding, welding, and diffusion bonding.

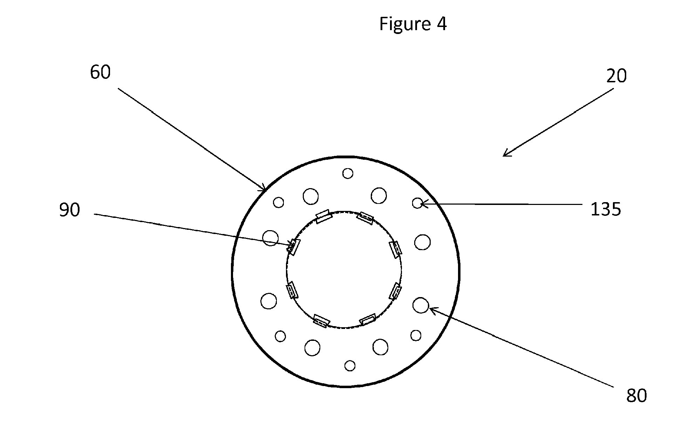

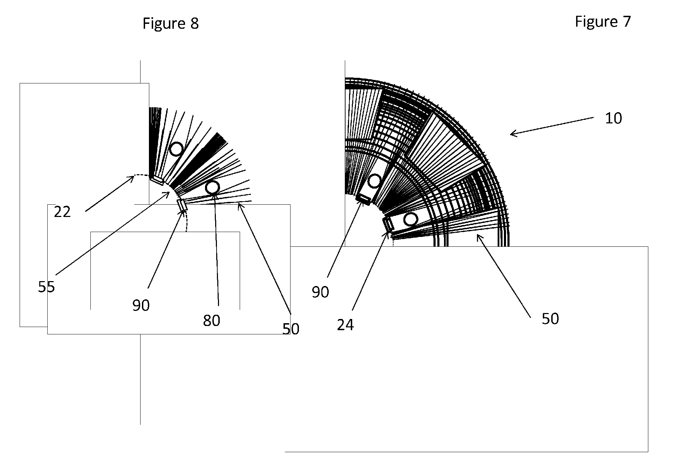

Referring to Figures 4, 7 and 8 said boss ring 20, may include raised castellation portions 90 circumferentially spaced around said inner circumference 22. Preferably, said strands 50 pass between said castellation portions 90 and are confined there between such as to maintain a clear inner surface to the boss. The strands 50 may be arranged to form discrete spaced apart rib like structures 55 or may be evenly distributed on the outer periphery as shown in Figure 7. Referring to Figure 8, rib like structures 55 in-filling between magnets 40 when infused with resin and cured, adds strength to the rotor and assists in resisting the coning force exerted by the said permanent magnets 40 due to their attraction to the motor stator not shown.

For ease of manufacture said castellation's 90 may be aligned with attachment features 80 and strands 50 arranged such that they do not interfere with said attachment features 80. With this arrangement, attachment features 80 may be used to attach rotors to output shafts not shown, without interference from reinforcement strands 50, 55.

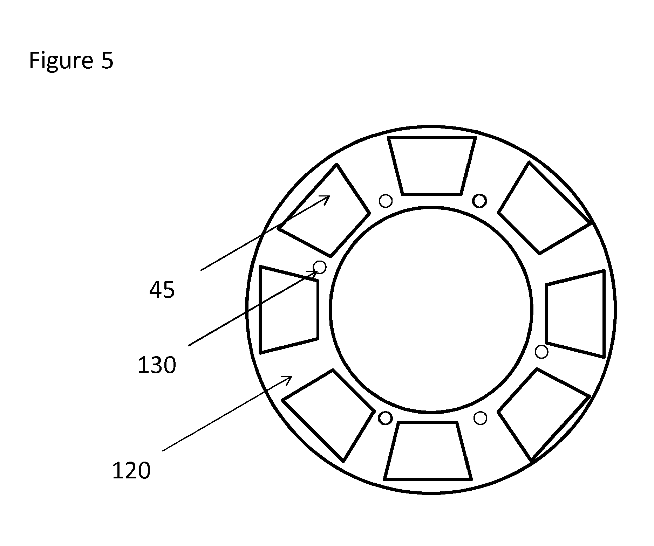

Referring once again to Figure 1, a composite rotor 10 may be assembled from a boss ring 20 attached to a annular ring 30 and with reference to Figure 5 an inlay mask 120 having apertures for magnets 45 may be used to locate said magnets 40 with respect to rotation and radial position on said annular ring 30, said inlay mask 120 extending between said magnets 40 and preferably terminating substantially flush with the outer surface 44 of each magnet, such as to planarise the surface. A planarised surface reduces wind turbulence when rotors 10 are caused to rotate during their operation.

Referring to Figures 5 and 6, angular rotation of said inlay mask 120 is achieved by location features 130 in said inlay mask 120, which engage with corresponding location features 135 in said boss ring 20, said location features 130 determining the rotational and radial position of said inlay mask 120 and hence said permanent magnets 40 laid therein. Inlay mask 120 may be formed from a nonmagnetic and preferably non-conducting material and is usefully compatible with infusion resins so as to form a strong bond between inlay mask and resin infusion. Inlay mask 120 materials include closed and open cell foams, various composites and extruded plastics. Optionally, inlay masks may have thinner sections (not shown) between magnets so as to allow build-up of reinforcement fibre during toroidal winding, without said build-up reinforcement rising above said magnet surface. Optionally an inlay mask 120 may be used to accurately place and bond permanent magnets 40 to said annular ring 30 after which said inlay mask 120 is removed prior to toroidal winding of reinforcement fibre. In the instance where inlay mask is to be removed said inlay mask may be made from poly-tetra-fluoro-ethylene PTFE or similarly low surface energy material to which adhesive for bonding said permanent magnet 40 to said annular ring 30 will not adhere so as to allow easy removal of said inlay mask once magnets are bonded.

A composite rotor 10 may be toroidally wound with any suitable reinforcement fibre 50 wherein said over-winding comprises uniaxial fibre tow, chosen from a group that includes; glass, carbon, aramid, molecularly spun polyethylene and the like, but may also include lightly woven fibres, and fibre mixtures taken from the same group. Such tows may be loose bundles of fibres, able to readily conform to a substrate and to be spread. Optionally said tows may be loosely woven as tapes with less degree of freedom for spreading but retaining an ability to be concentrated to a more uniaxial cross-section. There is known to those skilled in the art, tow fibres that are impregnated with a B-staged resin that may be toroidally wound and then subsequently heated and cured.

A composite rotor 10 gains strength by virtue of reinforcement fibre 50 wrapping which may optionally be evenly spread as shown in Figure 7 with fibres lying within the confines of the castellations as shown in Figures 7 and 8. With said fibres 50 laying within said castellations 90 the inner free space bounded by said castellations 90 is free to be used without fear of damaging said fibre reinforcement. The use of high tensile strength reinforcement fibres 50 increases centrifugal strength of said composite rotor 10 and build-up of ribs 55 adds further to a rotor's structural strength. In one configuration, referring to Figure 8, there is provided a plurality of discrete ribs 55 of said over-winding 50, each rib 55 extending between said inner circumference 22 of said boss 20 and said outer diameter 34 of said annular ring 30 and being circumferentially spaced from each other. The form and shape of such ribs 55 is dependent on toroidal winding parameters and physical characteristics of said reinforcement fibre 55. It is inevitable that winding density on the inner perimeter 22 , reference Figure 5 is higher than the winding density on the outer perimeter of the rotor 34 reference Figure 1 or 60 reference Figure 2. Referring to Figures 7 and 8, all winding options are encompassed in the present invention from evenly spaced ribs 55 to evenly spaced fibre 50, to unevenly spaced ribs not shown.

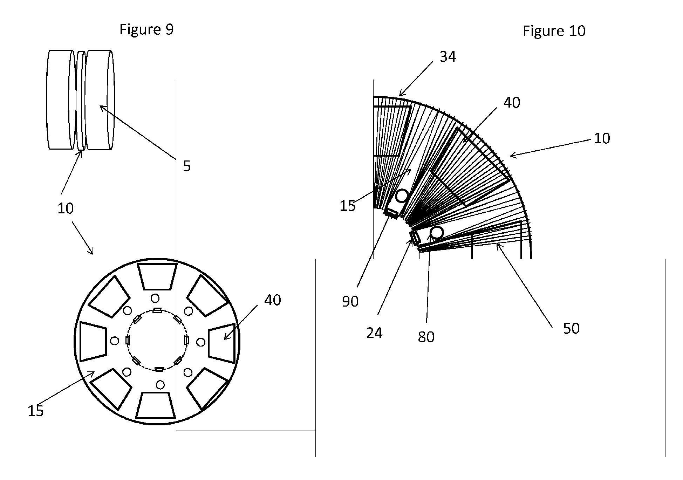

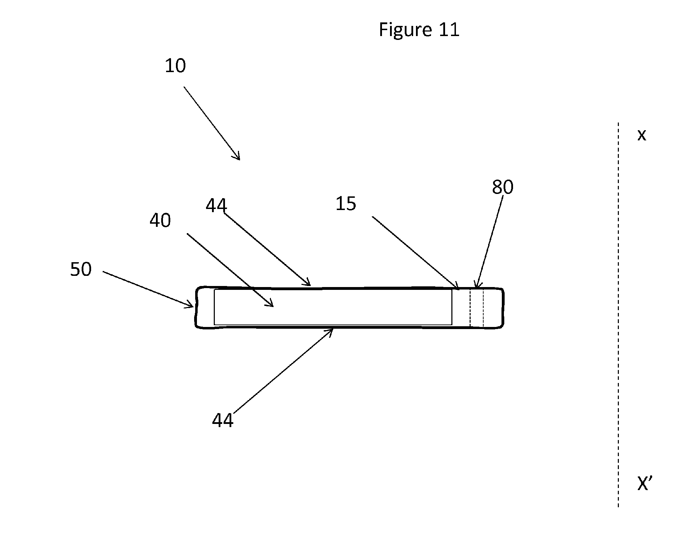

For single rotor, double stator, axial flux motors wherein said stators 5 surround the rotor, a composite rotor 10 of the present invention, reference Figure 9, 10 and 11, includes: a magnet support or holding means 15 for a plurality of permanent magnets 40 circumferentially spaced around the rotor 10 and being held thereby said holding means 15 extending between said magnets 40 and preferably terminating substantially flush with the outer surfaces 44 of each magnet; each of said permanent magnets 40 lying within said outer diameter 34 of said rotor 10; an over-winding of strands 50 of reinforcement material toroidally wound over said holding means 15 and said magnets 40. For said single rotor 10, double stator 5 motors, said single rotor does not encounter substantial axial forces because surrounding stators 5 interact in equal and opposite proportion on rotor magnets 40 in the axial direction, the net resultant axial force on said rotor 10 being essentially zero, nevertheless centripetal forces still apply on said rotor 10, said holding means 15 and said permanent magnets 40 at high rotational velocities. Significant radial and circumferential strength, sufficient to counter centripetal force generated by said rotational velocity is achieved by toroidal wrapping of reinforcement fibre 50. Various resins applied by various methods previously described herein may be used to encapsulate said fibre reinforcement.

For axial flux motors of the present invention wherein rotors are rotated at high rotational speed and large centripetal forces so generated can compromise rotor integrity and typically to meet these challenges large thickness of metal is frequently used to improve stiffness and strength, but this leads to excessively massive rotors, high inertia, eddy current losses and costly component assembly, solutions offered by the present invention being encasement of rotor components particularly magnets by a toroidal fibre tow wrap, strengthening of rotor segments by fibre wrap, minimised magnetic material satisfying flux carrying needs whilst minimising eddy currents thereby also reduced rotor mass and so inertial mass and the whole assembly having improved manufacturability by use of standard toroidal winding apparatus.

## Claims

1. A composite rotor (10) for an axial flux motor wherein the rotor (10) includes: a holding means (15) for a plurality of permanent magnets (40) circumferentially spaced around the rotor (10). each of said permanent magnets (40) lying within said outer diameter (34) of said rotor (10); and an over-winding of strands (50) of reinforcement material toroidally wound over said holding means (15) and said magnets (40).

2. A composite rotor (10) for an axial flux motor as claimed in claim 1 wherein the rotor (10) includes: a boss ring (20), having an inner circumference (24) and an outer circumference (22); an annular ring (30) forming said holding means (15), having an inner diameter (32), an outer diameter (34), a first side face (35) and a second side face (36), wherein said plurality of permanent magnets (40) are circumferentially spaced around the first side face (35) and within said outer diameter (34) of said annular ring (30); and wherein said over-winding of strands (50) of reinforcement material (50) extends over and around said boss ring (20), said annular ring (30) and said magnets (40).

3. A composite rotor (10) as claimed in claim 2 and including an encapsulation layer (100) extending over and through said reinforcement material (50) and in-filling between said strands (50).

4. A composite rotor (10) as claimed in claim 3 and wherein said encapsulation layer (100) comprises a cured resin material.

5. A composite rotor (10) as claimed in any one of claims 2 to 4 wherein said boss ring (20) includes a radially extending support member (26) extending radially outward from said outer circumference (22).

6. A composite rotor (10) as claimed in claim 5 and including an axially extending outer circular perimeter (60) and wherein said outer circumference (22) of the boss (20) forms an axially extending inner perimeter (70).

7. A composite rotor (10) as claimed in any one of claims 2 to 5, wherein said boss ring (20) includes raised castellation portions (90) circumferentially spaced around said inner circumference (22) and wherein said strands (50) pass between said castellation portions (90) and are confined therebetween.

8. A composite rotor (10) as claimed in claim 7 and wherein said boss ring (20) includes one or more attachment features (holes) 80.

9. A composite rotor (10) as claimed in claim 8 and wherein said one or more attachment features (80) are radially aligned with one or other of said castellation portions (90).

10. A composite rotor (10) as claimed in any one of claims 2 to 9 and including an inlay mask (120) extending between said magnets (40) and terminating substantially flush with an outer surface (44) of each magnet (40).

11. A composite rotor (10) as claimed in claim 10 wherein said inlay mask has location features (130), that engage with corresponding location features (135) on said boss ring (20), said location features (130) determining the rotational position of said inlay mask.

12. A composite rotor (10) as claimed in any one of claims 1 to 11, wherein said over-winding (50) comprises uniaxial fibre tow.

13. A composite rotor (10) as claimed in any one of claims 1 to 12 in which the holding means (15) comprises an electrical steel lamination.

14. A composite rotor (10) as claimed in any one of claims 1 to 13 including a plurality of discrete ribs (55) of said over-winding (50), each rib (55) extending between said inner circumference (22) of said boss ring (20) and said outer diameter (34) of said annular ring (30) and being circumferentially spaced from each other.

15. A composite rotor (10) as claimed in any one of claims 1 to 14, wherein said over-winding (50) is more highly spread at a radially outer position than at a radially inner position.

16. A composite rotor as claimed in claim 1 for an axial flux motor wherein the rotor (10) includes: a holding means (15) for a plurality of permanent magnets (40) circumferentially spaced around the rotor (10) and being held by said holding means (15) extending between said magnets (40) and terminating substantially flush with the outer surface (44) of each magnet; each of said permanent magnets (40) lying within said outer diameter (34) of said rotor (10); an over-winding of strands (50) of reinforcement material toroidally wound over said holding means (15) and said magnets (40).
